# EUROPEAN PATENT SPECIFICATION

(11) **EP 0 847 914 B1**
(45) Date of publication and mention of the grant of the patent: **26.11.2003**
(21) Application number: 97118740.6
(22) Date of filing: 28.10.1997
(51) Int. Cl.: B62M 23/02

(54) **Power unit for motor-assisted bicycle**
Hilfsantrieb für Fahrräder
Bicyclette à assistance motorisée.

(30) Priority: 16.12.1996 JP 33616896; 14.02.1997 JP 3001497
(43) Date of publication of application: 17.06.1998
(73) Proprietor: HONDA GIKEN KOGYO KABUSHIKI KAISHA, Minato-ku Tokyo (JP)
(72) Inventor: Yahagi, Kunio, 4-1, Chuo 1-chome, Wako-shi, Saitama (JP); Chiba, Syoichi, 4-1, Chuo 1-chome, Wako-shi, Saitama (JP); Tezuka, Yoshihiro, 4-1, Chuo 1-chome, Wako-shi, Saitama (JP); Kobayashi, Akihito, 4-1, Chuo 1-chome, Wako-shi, Saitama (JP); Igarashi, Masashi, 1-4-1 Chuo, Wako-shi, Saitama-ken (JP)
(74) Representative: Liska, Horst, Dr.-Ing.

(56) References cited:
- FR-A- 2 302 231
- JP-A- 8 216 968
- US-A- 4 944 196
- PATENT ABSTRACTS OF JAPAN vol. 096, no. 010, 31 October 1996 & JP 08 149752 A (MATSUSHITA ELECTRIC IND CO LTD), 7 June 1996,
- PATENT ABSTRACTS OF JAPAN vol. 014, no. 243 (M-0977), 23 May 1990 & JP 02 066365 A (POLYPLASTICS CO), 6 March 1990,
- PATENT ABSTRACTS OF JAPAN vol. 017, no. 701 (M-1533), 21 December 1993 & JP 05 240325 A (TOYOTA MOTOR CORP;OTHERS: 01), 17 September 1993,

## Description

### Field of the Invention

The present invention relates to a power unit for a motor-assisted bicycle including a casing supported to a body frame and rotatably supporting a crankshaft having crank pedals at its opposite ends, a power transmitting member rotatably supported to the casing and operatively connected to a rear wheel, for transmitting torque from the crankshaft, an electric assisting motor mounted to the casing and having a motor shaft whose axis is parallel to the axis of the crankshaft, the axial length of the motor along the axis of the motor shaft being smaller than the axial length of the crankshaft, and a reduction gear train provided between the motor and the power transmitting member.

### Prior Art

Such a power unit is known from JP-A-8-216968, for example.

JP-A-08 14 9752 discloses a synthetic resin film applied o the end face of the gear which protects the gear against hitting damage thus eliminating generation of high level impact noise caused by the hitting damage at the time of mating.

In JP-A-02 066365 thermoplastic resin is used as material for a gear to obtain low noise.

In JP-A-05 240325 a gear made of fiber-reinforced resin is provided which, among other things, is excellent in the reduction of engagement noise.

FR-A-2 302 231 discloses a gear made of synthetic resin.

### Problem to be Solved by the Invention

In the conventional power unit, the electric assisting motor has a compact size such that the axial length of the motor along the axis of the motor shaft parallel to the axis of the crankshaft is smaller than the axial length of the crankshaft. Accordingly, the motor is necessarily of a high-speed type with a relatively short length of winding. As a result, the rotating speed of a gear at least on the motor side in the reduction gear train provided between the motor and the power transmitting member is relatively high. In the reduction gear train of the conventional power unit, however, all gears are formed of metal, causing a relatively large gear noise due to high-speed rotation of the gears.

It is accordingly an object of the present invention to provide a power unit for a motor-assisted bicycle which can minimize the gear noise generated from the reduction gear train, with high working accuracy of the gear teeth and reliable coupling of the gear to the shaft.

For solving the problem, there is provided a power unit in accordance with claim 1, 2, 3 and 4.

Since at least the outer circumferential portion of at least one specific gear in the reduction gear train is formed of a synthetic resin, the generation of a gear noise at a meshing portion between the specific gear and another gear meshing therewith can be suppressed. Accordingly, although the motor is of a high-speed type, the generation of a gear noise from the reduction gear train can be suppressed.

If said specific gear comprises a metal boss coupled to a shaft rotatably supported to said casing and a synthetic resin ring member secured to said metal boss, said synthetic resin ring member having a plurality of outer circumferential gear teeth. Accordingly, the outer circumferential gear teeth required to have high working accuracy can be formed by molding of a synthetic resin, thereby improving the accuracy of the gear teeth. Additionally, a coupling load for fixing the specific gear to the shaft is prevented from acting on the ring member which is relatively weak in strength due to the synthetic resin, so that the coupling load can be increased to thereby ensure reliable coupling of the specific gear to the shaft.

According to the invention as defined in claim 4, the power unit comprises a shaft rotatably supported to said casing, a stopper provided on said shaft for receiving one axial end of said specific gear in an axial direction of said shaft, a seat member detachably mounted on said shaft so as to be opposed to the other axial end of said specific gear in said axial direction of said shaft, and a spring member provided between said seat member and the other axial end of said specific gear for exerting a biasing force for pressing the one axial end of said specific gear against said stopper, said specific gear being mounted on said shaft so that rotation of said specific gear relative to said shaft is prohibited. Accordingly, in fixing to the shaft the specific gear meshing with another gear, no torque acts on the specific gear at least the outer circumferential portion of which is formed of a synthetic resin relatively weak in strength and meshes with the other gear. Thus, the specific gear can be securely fixed to the shaft.

Preferably, said specific gear meshes with a drive gear fixed to said motor shaft. Accordingly, the generation of a gear noise at a meshing portion between the highest-speed gears in the reduction gear train can be suppressed, thereby enhancing the gear noise suppressing effect.

Preferably, said motor comprises a cylindrical housing having an open end and a closed end, said housing being detachably mounted to said casing, a first bearing provided at said closed end of said housing for rotatably supporting one end of said motor shaft, a second bearing provided at a support wall portion of said casing opposed to said open end of said housing for rotatably supporting an axially intermediate portion of said motor shaft, a drive gear mounted on the other end of said motor shaft projecting from said support wall portion, a pair of parallel flat engagement surfaces formed on the outer circumference of said motor shaft. Accordingly, prior to mounting the housing of the motor to the casing, the drive gear can be securely mounted on the other end of the motor shaft in the condition that a tool such as a wrench is engaged with the flat engagement surfaces of the motor shaft to prohibit the rotation of the motor shaft. Accordingly, even when mounting the drive gear on the motor shaft in the condition that the drive gear meshes with the specific gear, no torque acts on the specific gear, so that the specific gear can be protected.

### Preferred Embodiment

A preferred embodiment of the present invention will now be described with reference to the attached drawings.

FIGS. 1 to 16 show a first preferred embodiment of the present invention, in which:
FIG. 1 is a side view of a motor assisted bicycle;
FIG. 2 is a vertical sectional view of a power unit;
FIG. 3 is a cross section taken along the line 3-3 in FIG. 2;
FIG. 4 is a side view taken in the direction of an arrow 4 in FIG. 3 in the condition that a drive sprocket is omitted;
FIG. 5 is a cross section taken along the line 5-5 in FIG. 4;
FIG. 6 is an enlarged view of a crankshaft and its associated parts shown in FIG. 3;
FIG. 7 is a cross section taken along the line 7-7 in FIG. 6;
FIG. 8 is a cross section taken along the line 8-8 in FIG. 6;
FIG. 9 is a view taken along the line 9-9 in FIG. 6, showing an engaged condition of an inner slider and a clutch inner ring;
FIG. 10 is an enlarged sectional view of an electric assisting motor and its associated parts shown in FIG. 3;
FIG. 11 is an enlarged cross section taken along the line 11-11 in FIG. 4;
FIG. 12 is an enlarged cross section taken along the line 12-12 in FIG. 10;
FIG. 13 is an elevational view of a boss;
FIG. 14 is an elevational view of a ring member;
FIG. 15 is an elevational view of a reinforcing plate;
FIG. 16 is an exploded perspective view of a cover.
FIG. 17 is a sectional view similar to FIG. 10, showing a second preferred embodiment of the present invention.

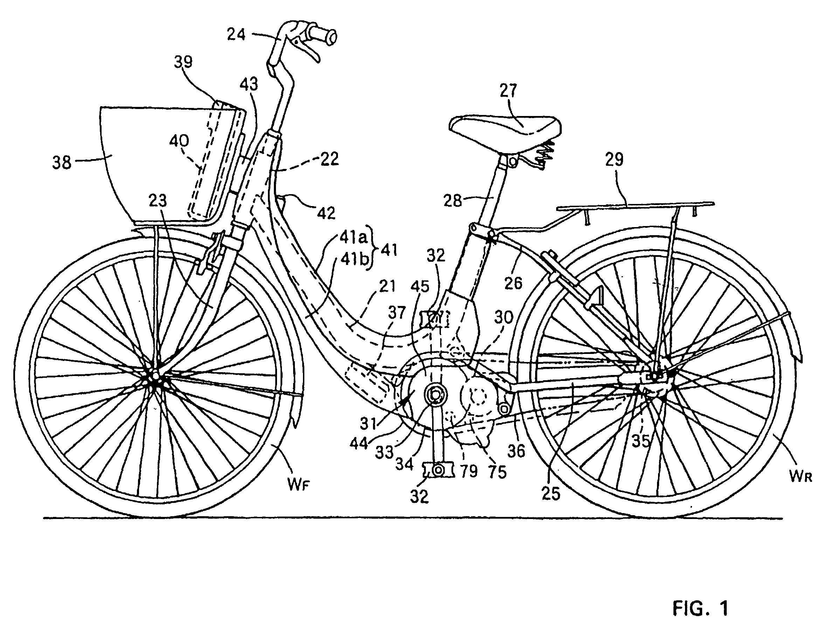

Referring first to FIG. 1, the motor-assisted bicycle includes a body frame 21 having a substantially U-shaped configuration as viewed in side elevation. A front fork 23 is steerably supported to a head pipe 22 connected to the front end of the body frame 21. A front wheel W_{F} is rotatably supported to the lower ends of the front fork 23. A bar handle 24 is provided at the upper end of the f ront fork 23. A power unit 31 having an electric assisting motor 30 is provided at a lower portion of the body frame 21. A pair of right and left rear forks 25 extend obliquely downward from the body frame 21 at a position above a rear portion of the power unit 31 and extend substantially horizontally at a position behind the power unit 31. A rear wheel W_{R} is rotatably supported to the rear ends of the rear forks 25. A pair of right and left stays 26 extend between the rear ends of the rear forks 25 and the rear end of the body frame 21. A seat post 28 having a seat 27 at its upper end is mounted at a rear portion of the body frame 21 in such a manner that the seat 27 is vertically adjusted in position. A carrier 29 is fixedly located behind the seat 27.

A crankshaft 33 having crank pedals 32 at its opposite ends is rotatably supported to a casing 45 of the power unit 31. A drive sprocket 34 is provided on the crankshaft 33 so that it can transmit torque from the crankshaft 33 and can also apply an assisting force from the motor 30 to the crankshaft 33. An endless chain 36 is wrapped between the drive sprocket 34 and a driven sprocket 35 provided on an axle of the rear wheel W_{R}.

The operation of the motor 30 is controlled by a controller 37 fixedly supported to a lower portion of the body frame 21 before the power unit 31. The controller 37 controls the operation of the motor 30 according to the rotating speed of the motor 30 and the input torque from the crank pedals 32.

A front basket 38 is mounted through a bracket 43 to the head pipe 22. A battery storing case 39 is provided at a rear portion of the front basket 38, and is mounted to the bracket 43. A battery 40 for supplying electric power to the motor 30 is removably stored in the battery storing case 39.

Most of the body frame 21 is covered with a cover 41. A main switch 42 for supplying electric power from the battery 40 to the controller 37 and the motor 30 is provided at an upper portion of the cover 41.

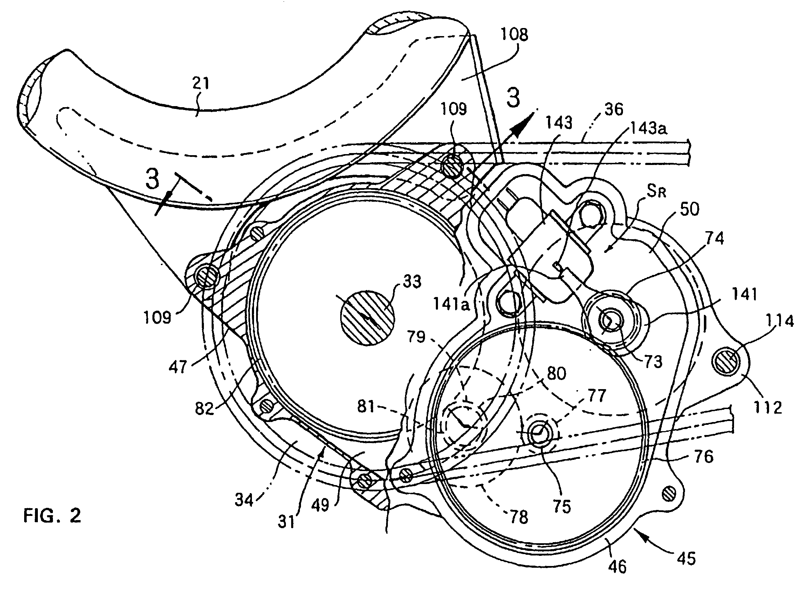

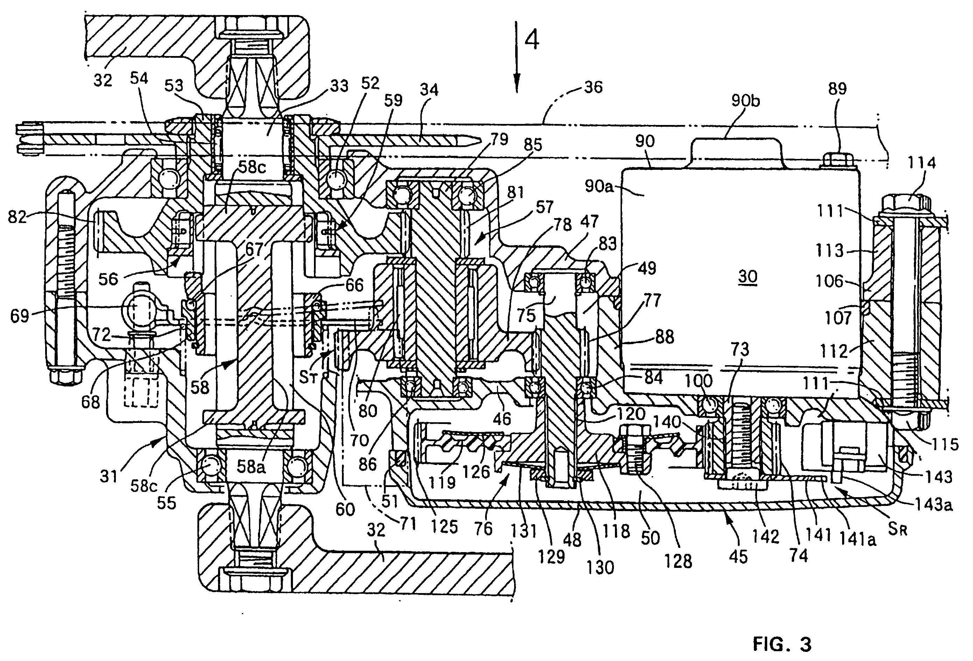

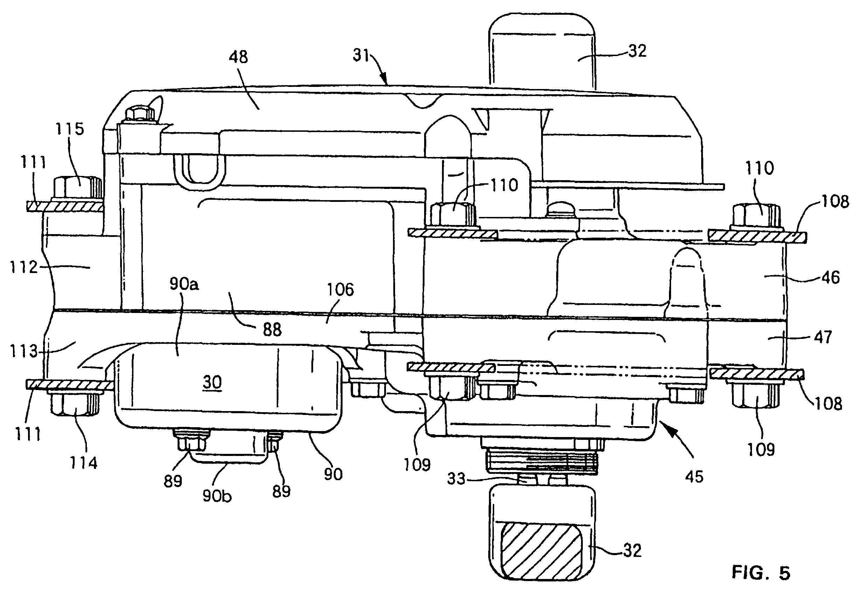

Referring also to FIGS. 2 to 5, the casing 45 of the power unit 31 is composed of a left casing half 46, a right casing half 47 connected to the left casing half 46 to define a first storing chamber 49 in cooperation with the left casing half 46, and a cover 48 connected to the left casing half 46 to define a second storing chamber 50 in cooperation with the left casing half 46. A rubber gasket 51 is mounted in a connecting surface of the cover 48 connected to the left casing half 46.

The crankshaft 33 is rotatably supported to the casing 45 in such a manner that most of the crankshaft 33 is located in the first storing chamber 49. More specifically, a hollow rotating cylinder 53 as the power transmitting member is supported through a ball bearing 52 to the right casing half 47. A right end portion of the crankshaft 33 is supported through a roller bearing 54 to the inner circumference of the rotating cylinder 53, and a left end portion of the crankshaft 33 is supported through a ball bearing 55 to the left casing half 46. The drive sprocket 34 located on the right side of the right casing half 47 is connected to the rotating cylinder 53.

A depression force applied to the crank pedals 32 fixed at the opposite ends of the crankshaft 33 is transmitted from the crankshaft 33 through power transmitting means 56 to the drive sprocket 34. The motor 30 is mounted on the casing 45, and an output from the motor 30 is transmitted through a reduction gear train 57 to the drive sprocket 34, so as to assist the depression force applied to the crank pedals 32.

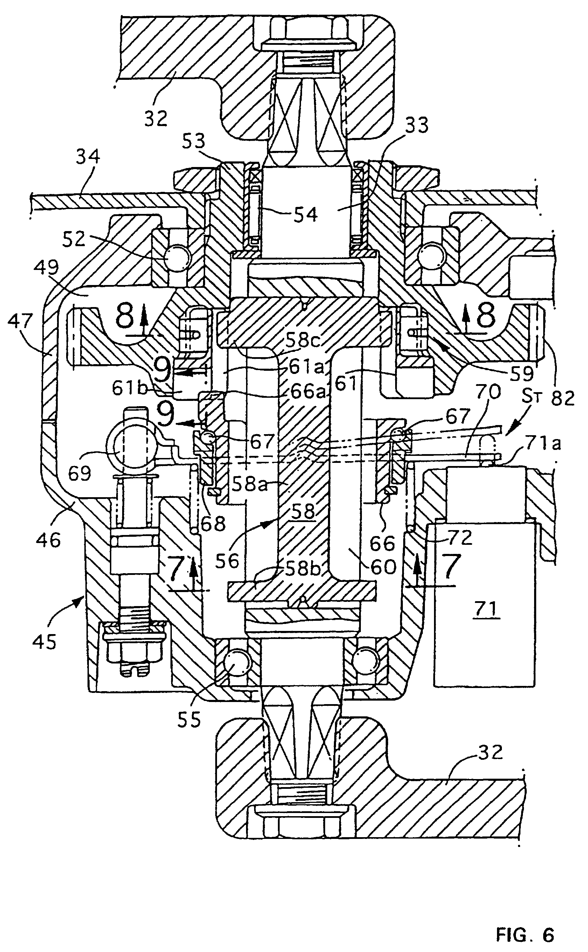

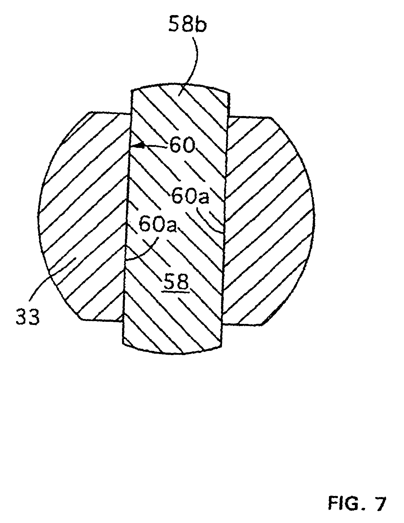

Referring also to FIGS. 6 to 8, the power transmitting means 56 for transmitting the torque of the crankshaft 33 to the drive sprocket 34 is located in the first storing chamber 49, and is composed of a torsion bar 58 connected to the crankshaft 33 and a first one-way clutch 59 provided between the rotating cylinder 53 and the torsion bar 58.

The crankshaft 33 is formed with an axially extending slit 60. The torsion bar 58 is mounted in the slit 60. The torsion bar 58 has a solid cylindrical shaft portion 58a rotatably engaged between opposed inner wall surfaces 60a of the slit 60, an arm portion 58b formed at a left end of the shaft portion 58a (a lower end as viewed in FIG. 6) so as to project in opposite directions, and another arm portion 58c formed at a right end of the shaft portion 58a (an upper end as viewed in FIG. 6).

The arm portion 58b of the torsion bar 58 is closely engaged with the inner wall surfaces 60a of the slit 60, thereby being integrally connected to the crankshaft 33. On the other hand, the arm portion 58c of the torsion bar 58 is loosely engaged in the slit 60 in such a manner that opposite gaps α are defined between the arm portion 58c and the inner wall surfaces 60a of the slit 60. That is, the arm portion 58a of the torsion bar 58 is allowed to be twisted within a range of angular motion of the arm portion 58c by the gaps α.

The first one-way clutch 59 includes a clutch inner ring 61 coaxially surrounding the crankshaft 33 so as to be rotatable relative thereto, the rotating cylinder 53 as a clutch outer ring coaxially surrounding the clutch inner ring 61, and a plurality of (e.g., four) ratchet pawls 62 pivotably supported to the outer circumference of the clutch inner ring 61 and biased in their expanding directions by an annular spring 63. A pair of recesses 61a are formed on the inner circumference of the clutch inner ring 61, and the opposite ends of the arm portion 58c of the torsion bar 58 are engaged with the recesses 61a. A plurality of ratchet teeth 64 are formed on the inner circumference of the rotating cylinder 53, for engaging the ratchet pawls 62.

According to the first one-way clutch 59 as described above, when the crank pedals 32 are depressed to normally rotate the crankshaft 33, the torque of the crankshaft 33 is transmitted through the torsion bar 58, the first one-way clutch 59, and the rotating cylinder 53 to the drive sprocket 34, whereas when the crank pedals 32 are depressed to reversely rotate the crankshaft 33, the first one-way clutch 59 slips to allow reverse rotation of the crankshaft 33.

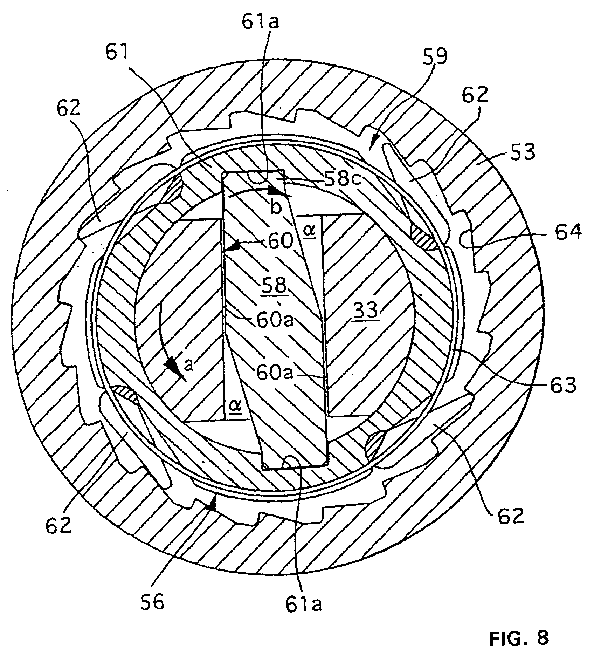

When the torque having the direction of an arrow a shown in FIG. 8 is input from the crank pedals 32 to the crankshaft 33, the clutch inner ring 62 to which a load on the rear wheel W_{R} has been transmitted through the rotating cylinder 53 and the ratchet pawls 62 resists against the torque having the direction a, so that the arm portion 58c of the torsion bar 58 is twisted in the direction of an arrow b shown in FIG. 8 to rotate relative to the crankshaft 33. As a result, there occurs relative rotation between the crankshaft 33 and the clutch inner ring 61 according to the torque input to the crankshaft 33.

An inner slider 66 is supported to the outer circumference of the crankshaft 33 so as to be unrotatable relative thereto and axially movable relative thereto. An outer slider 68 is supported through a plurality of bolts 67 to the outer circumference of the inner slider 66 so as to be rotatable relative thereto.

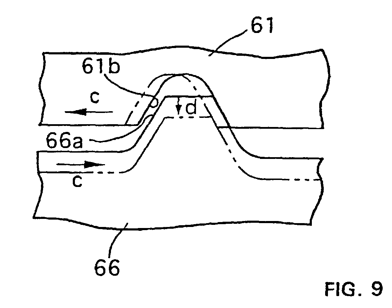

As best shown in FIG. 9, a recessed cam surface 61b is formed on an end surface of the clutch inner ring 61 in the first one-way clutch 59 on the inner slider 66 side, and a projected cam surface 66a engaging the cam surface 61b is formed on the inner slider 66.

A detection lever 70 is pivotably supported at its base end portion through a pivot pin 69 to the left casing half 46. An intermediate portion of the detection lever 70 is in contact with the outer slider 68 on the side opposite to the clutch inner ring 61. A stoke sensor 71 constituting torque detecting means S_{T} in cooperation with the detection lever 70 is mounted on the left casing half 46. A front end portion of the detection lever 70 is in contact with a detection element 71a of the stroke sensor 71. A spring 72 is interposed under compression between the detection lever 70 and the left casing half 46, so that the detection lever 70 is kept in elastic contact with the outer slider 68 by a biasing force of the spring 72. Accordingly, the outer slider 68 and the inner slider 66 are biased toward the clutch inner ring 61.

When the torsion bar 58 is twisted according to the input torque from the crank pedals 32 to the crankshaft 33, the inner slider 66 is rotated relative to the clutch inner ring 61 in the direction of an arrow c shown in FIG. 9, so that the cam surface 66a of the inner ring 66 is pressed against the cam surface 61b of the clutch inner ring 61. As a result, the inner slider 66 slides in the direction of an arrow d shown in FIG. 9 along the axis of the crankshaft 33 against the biasing force of the spring 72, and the detection lever 70 pressed by the outer slider 68 moving with the inner slider 66 swings about the pivot pin 69, thereby pressing the detection element 71a of the stroke sensor 71. The stroke of the detection element 71a is proportional to the amount of twist of the torsion bar 58, i.e., the input torque from the crank pedals 32. Thus, the input torque is detected by the torque detecting means S_{T}.

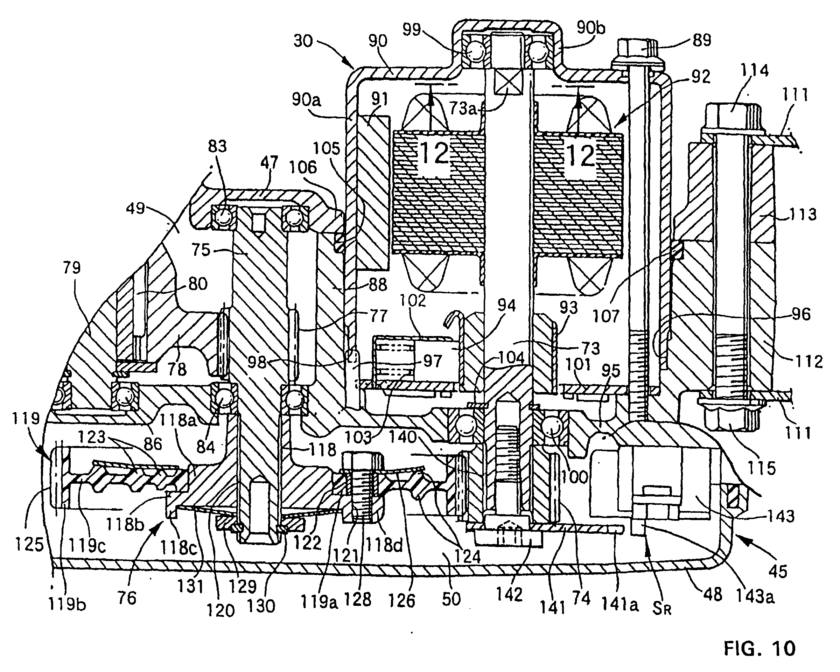

Referring also to FIG. 10, the reduction gear train 57 for transmitting the power of the motor 30 to the drive sprocket 34 includes a drive gear 74 fixed to a motor shaft 73 of the motor 30 in the second storing chamber 50, a first intermediate gear 76 as the specific gear fixed to one end of a first idle shaft 75 in the second storing chamber 50 and meshing with the drive gear 74, a second intermediate gear 77 formed integrally with the first idle shaft 75 in the first storing chamber 49, a third intermediate gear 78 meshing with the second intermediate gear 77, a second idle shaft 79 coaxial with the third intermediate gear 78, a second one-way clutch 80 provided between the third intermediate gear 78 and the second idle shaft 79, a fourth intermediate gear 81 formed integrally with the second idle shaft 79 in the first storing chamber 49, and a driven gear 82 formed integrally with the rotating cylinder 53 to which the drive sprocket 34 is connected and meshing with the fourth intermediate gear 81.

The first idle shaft 75 has an axis parallel to the axis of the motor shaft 73 of the motor 30. A ball bearing 83 is interposed between the right casing half 47 and the first idle shaft 75, and a ball bearing 84 is interposed between the left casing half 46 and the first idle shaft 75. The second idle shaft 79 has an axis parallel to the axis of the first idle shaft 75. A ball bearing 85 is interposed between the right casing half 47 and the second idle shaft 79, and a ball bearing 86 is interposed between the left casing half 46 and the second idle shaft 79.

In the reduction gear train 57 as mentioned above, the torque generated by the operation of the motor 30 is transmitted to the drive sprocket 34 with a rotating speed reduced. When the operation of the motor 30 is stopped, the second one-way clutch 80 operates to permit idling of the second idle shaft 79, thereby allowing rotation of the drive sprocket 34 by the depression force applied to the crank pedals 32.

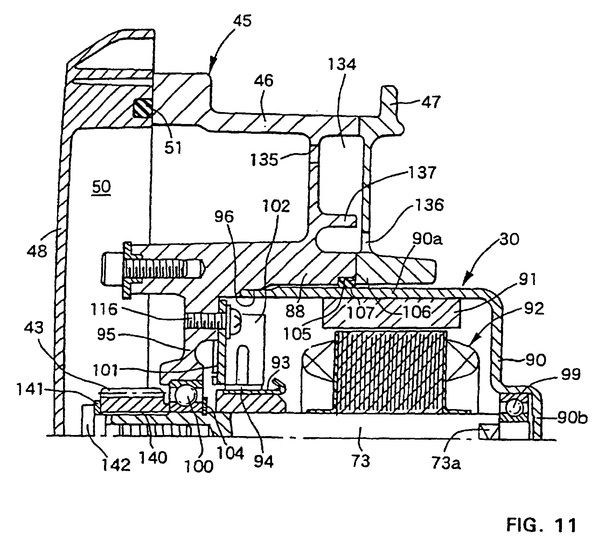

Referring also to FIG. 11, the left casing half 46 of the casing 45 is integrally formed with a cylindrical portion 88 projecting to the side opposite to the cover 48. A housing 90 of the motor 30 is engaged in the cylindrical portion 88, and secured to the left casing half 46 by means of a plurality of (e.g., two) bolts 89.

The motor 30 is mounted on the casing 45 in such a manner that the axial length of the motor 30 along the axis of the motor shaft 73 parallel to the axis of the crankshaft 33 is set smaller than the axial length of the crankshaft 33. The motor 30 includes a cylindrical housing 90 having a cylindrical yoke 90a closed at its one end, a plurality of magnets 91 fixed to the inner surface of the yoke 90a, a rotor 92 having the motor shaft 73 and accommodated in the housing 90 in coaxial relationship therewith, a commutator 93 provided on the motor shaft 73 on the inner side corresponding to the other end of the yoke 90a, and a plurality of brushes 94 kept in sliding contact with the commutator 93.

The left casing half 46 is integrally formed with a support wall portion 95 opposed to an open end of the housing 90 of the motor 30 so as to close an inner end of the cylindrical portion 88. An engaging portion 96 is formed on the inner surface of the cylindrical portion 88 in the vicinity of the inner end thereof. The open end of the housing 90 is engaged with the engaging portion 96 in a spigot and socket fashion. A positioning pin 97 is implanted in the support wall portion 95, and a notch 98 for engaging the positioning pin 97 is formed at the open end of the housing 90. Accordingly, the housing 90 is engaged in the cylindrical portion 88 in such a manner as to be held both in radial position and in circumferential position, and the bolts 89 whose flanged head portions are engaged with the closed end of the housing 90 are threadedly engaged with the support wall portion 95.

One end of the motor shaft 73 is rotatably supported through a ball bearing 99 as the first bearing to a bearing housing 90b projecting outward at a central portion of the closed end of the housing 90. The other end of the motor shaft 73 is rotatably inserted through the support wall portion 95 to project into the second storing chamber 50. A ball bearing 100 as the second bearing permitting air communication between the housing 90 and the second storing chamber 50 is interposed between the projecting end of the motor shaft 73 and the support wall portion 95 in such a manner that the outer ring of the ball bearing 100 is press-fitted with the support wall portion 95. A stop ring 104 is mounted on the motor shaft 73 to limit movement of the inner ring of the ball bearing 100 toward the commutator 93.

A support plate 101 is fixed to the support wall portion 95 by means of a screw member 116, and a plurality of brush holders 102 are provided on the support plate 101. The brushes 94 are slidably held to the brush holders 102. A spring 103 is interposed between each brush holder 102 and its corresponding brush 94 to bias the brush 94 toward the commutator 93, thereby making sliding contact of the brush 94 with the commutator 93. In this manner, the brush holders 102, the brushes 94, the ball bearing 100, etc. are directly supported to the left casing half 46 without being held by using a motor bracket or the like. Accordingly, the number of parts can be reduced, and the size of the motor 30, accordingly the size of the power unit 31 along the axis of the crankshaft 33 can be further reduced.

An annular recess 105 like a shoulder is formed on the inner circumference of the cylindrical portion 88 at its outer end. The right casing half 47 is formed with an annular portion 106 surrounding the housing 90 of the motor 30 and joined with the outer end of the cylindrical portion 88. An O-ring 107 is held between the annular recess 105 and the annular portion 106 to make close contact with the outer circumference of the yoke 90a of the housing 90.

The casing 45 is supported to the body frame 21 in such a manner that the axis of the crankshaft 33 and the axis of the motor shaft 73 of the motor 30 located behind the crankshaft 33 are of substantially the same level from the ground surface. A pair of right and left brackets 108 are fixed to a lower portion of the body frame 21. The right and left casing halves 47 and 46 are fixedly joined together at their front portions by means of a pair of bolts 109 and a pair of nuts 110. A pair of right and left brackets 111 are fixed to the right and left rear forks 25 at their front portions. The left casing half 46 is integrally formed at its rear portion with a hanger portion 112 projecting outward from the cylindrical portion 88. The right casing half 47 is integrally formed with a hanger portion 113 continued to the annular portion 106. The hanger portion 112 of the left casing half 46 and the hanger portion 113 of the right casing half 47 are held between the brackets 111 and fixedly supported therebetween by a bolt 114 and a nut 115.

The drive gear 74 is mounted through a spline 140 on the other end portion of the motor shaft 73 projecting from the support wall portion 95 into the second storing chamber 50. The inner ring of the ball bearing 100 whose outer ring is press-fitted with the support wall portion 95 is stopped by the stop ring 104. A bolt 142 coaxial with the motor shaft 73 is threadedly engaged with the other end portion of the motor shaft 73 so as to hold the drive gear 74 and a reluctor 141 in cooperation with the inner ring of the ball bearing 100. Thus, the drive gear 74 is fixed to the motor shaft 73 so that the movement of the drive gear 74 along the axis of the motor shaft 73 is prevented.

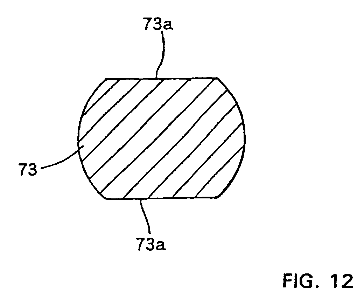

As shown in FIG. 12, a pair of flat engagement surfaces 73a parallel to each other are formed on the outer circumferential surface of the motor shaft 73 at its one end portion on the ball bearing 99 side in order that when securing the bolt 142 to the motor shaft 73, the rotation of the motor shaft 73 is to be prevented by engaging a tool such as a wrench with the motor shaft 73.

The reluctor 141 and an electromagnetic pickup coil type sensor 143 constitute rotating speed detecting means S_{R}. A projection 141a is formed at the outer circumference of the reluctor 141. The sensor 143 is fixed to the left casing half 46 of the casing 45 and has a detecting portion 143a to which the projection 141a of the reluctor 141 comes into proximity and opposition. The reluctor 141 has a shape such that it allows the first intermediate gear 76 to be mounted to and demounted from the first idle shaft 75 without the need for demounting the reluctor 141 from the drive gear 74 at a given rotational position of the reluctor 141.

An outer circumferential portion of the first intermediate gear 76 meshing with the drive gear 74 is formed of a synthetic resin. That is, the first intermediate gear 76 is composed generally of a metal boss 118 fixedly mounted on the first idle shaft 75 and a synthetic resin ring member 119 secured to the metal boss 118. The ring member 119 has a plurality of outer circumferential teeth 125.

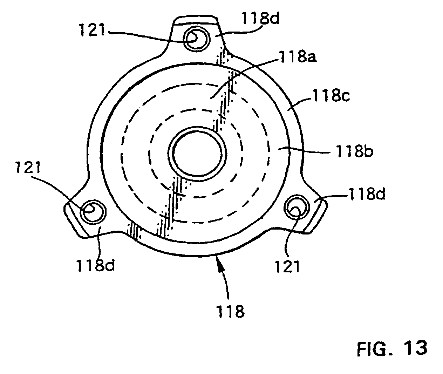

Referring also to FIG. 13, the boss 118 is mounted through a spline 120 on the first idle shaft 75 in such a manner that relative rotation of the boss 118 about the axis of the first idle shaft 75 is prohibited by the spline 120 and one end of the boss 118 abuts against the inner ring of the ball bearing 84, which serves as a stopper, provided on the first idle shaft 75. The boss 118 is integrally formed at its other end with a flange portion 118a projecting radially outward. An annular mounting plate portion 118b projects radially outward from the flange portion 118a in such a manner that a shoulder is formed in cooperation with the outer circumference of the flange portion 118a on one side corresponding to the one end of the boss 118, and that an end surface of the mounting plate portion 118b and an end surface of the flan ge portion 118a corresponding to the other end of the boss 118 is flush with each other. A cylindrical portion 118c axially projects from the outer circumference of the mounting plate portion 118b on the other side corresponding to the other end of the boss 118. A plurality of (e.g., three) connecting portions 118d are formed on the outer circumference of the cylindrical portion 118c at circumferentially equal intervals so as to project radially outward in such a manner that an end surface of each connecting portion 118d and the end surface of the mounting plate portion 118b corresponding to the one end of the boss 118 are flush with each other. Each connecting portion 118d is formed with a tapped hole 121.

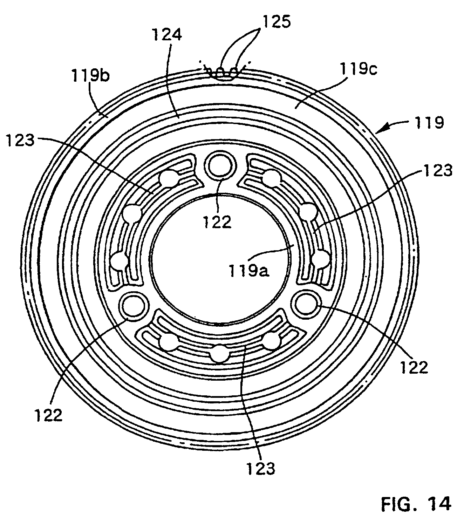

Referring also to FIG. 14, the ring member 119 includes a support portion 119a like a ring plate having an inner diameter allowing engagement of the flange portion 118a of the boss 118 and having an outer diameter corresponding to a phantom circle formed by connecting the radially outer edges of the connecting portions 118d of the boss 118, a cylindrical portion 119b surrounding the support portion 119a in coaxial relationship therewith, and a connecting plate portion 119c connecting the support portion 119a and the cylindrical portion 119b over the entire circumference. A plurality of (e.g., three) metal cylindrical collars 122 are embedded in the support portion 119a so as to correspond to the tapped holes 121 of the connecting portions 118d of the boss 118. A plurality of (e.g., two) arcuate ribs 123 project from each of the opposite surfaces of the support portion 119a at its parts between the collars 122. Further, a circular rib 124 coaxial with the cylindrical portion 119b projects from each of the opposite surfaces of the connecting plate portion 119c. The gear teeth 125 meshing with the drive gear 74 is formed over the outer circumference of the cylindrical portion 119b. The gear teeth 125 are formed as helical teeth, for example.

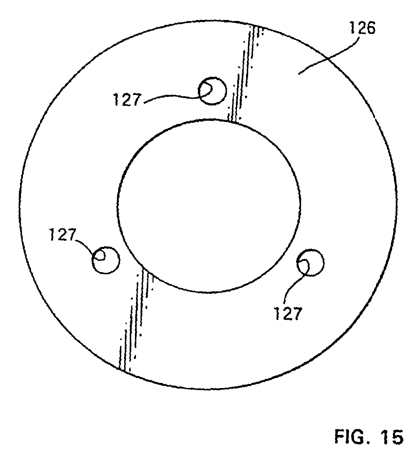

The support portion 119a of the ring member 119 is mounted on the mounting plate portion 118b of the boss 118 from the side corresponding to the one axial end of the boss 118. A metal reinforcing plate 126 is mounted on the ring member 119 on the side opposite to the mounting plate portion 118b. As shown in FIG. 15, the reinforcing plate 126 is a ring plate having a plurality of insert holes 127 corresponding to the collars 122. A bolt 128 is inserted through each insert hole 127 of the reinforcing plate 126 and each collar 122, and is threadedly engaged with each tapped hole 121 of the boss 118, thereby securing the ring member 119 to the boss 118 with an excess securing force being prevented from acting on the ring member 119 formed of a synthetic resin. Thus, the first intermediate gear 76 is assembled. The reinforcing plate 126 comes into resilient contact with the rib 124 on the side corresponding to the axial one end of the boss 118 by tightening the bolts 128, thereby increasing lateral rigidity of the ring member 119. Accordingly, inclination of the gear teeth 125 can be prevented to improve the dynamic meshing accuracy. Furthermore, the degree of freedom of shaping of the ring member 119 can be increased by the reinforcement of the reinforcing plate 126, thereby improving the accuracy of the gear teeth 125 to attain further improvement in the meshing accuracy.

In fixing the first intermediate gear 76 to the first idle shaft 75, the boss 118 of the first intermediate gear 76 is mounted on the first idle shaft 75 so as to be made unrotatable relative thereto through the spline 120, and one end of the first intermediate gear 76, i.e., one end of the boss 118 is made to abut against the inner ring of the ball bearing 84. Furthermore, a ringlike seat member 129 opposed to the other end of the first intermediate gear 76 is detachably mounted on the first idle shaft 75. That is, a stop ring 130 is engaged with the outer circumference of the first idle shaft 75 at its other end, and the seat member 129 is mounted on the first idle shaft 75 so that the axial movement of the seat member 129 away from the first intermediate gear 76 is prevented by the stop ring 130. A coned disk spring 131 as the spring member is provided between the first intermediate gear 76 and the seat member 129. An end portion of the coned disk spring 131 on the first intermediate gear 76 side abuts against the flange portion 118a of the boss 118 in such a manner that radially outward expansion of the coned disk spring 131 is limited by the cylindrical portion 118c of the boss 118. Accordingly, the first intermediate gear 76 is axially biased toward the inner ring of the ball bearing 84 by a biasing force of the coned disk spring 131. Thus, the first intermediate gear 76 prevented from rotating relative to the first idle shaft 75 by the spline 120 is pressed against the inner ring of the ball bearing 84 by the coned disk spring 131, thereby fixing the first intermediate gear 76 to the first idle shaft 75.

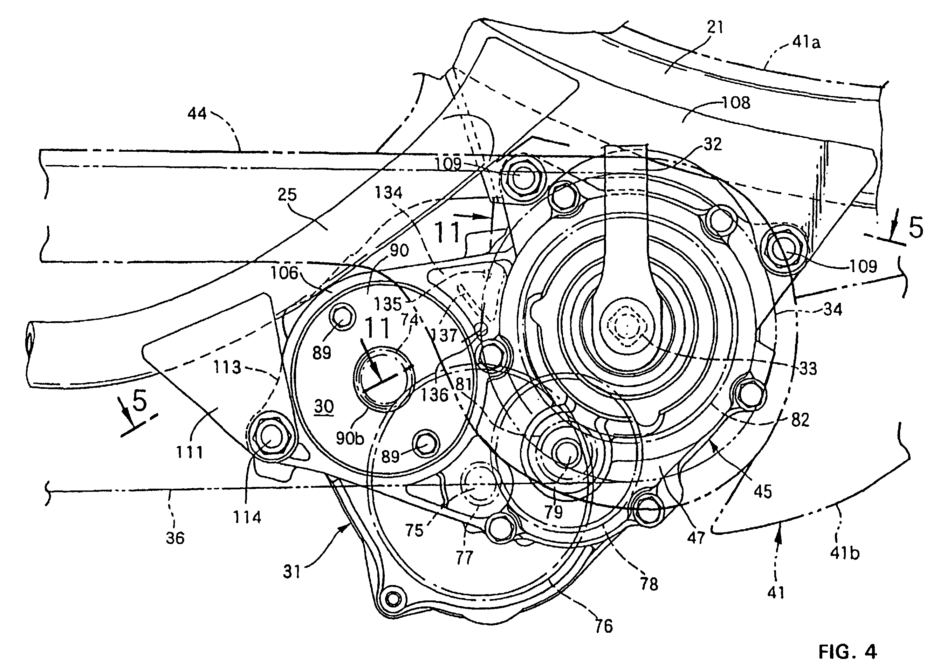

As apparent from FIGS. 2 and 4, the first and second idle shafts 75 and 79 of the reduction gear train 57 are lower in level than a straight line connecting the axis of the crankshaft 33 and the axis of the motor shaft 73 of the motor 30, and the first idle shaft 75 is lower in level than the second idle shaft 79. A breather chamber 134 is defined at an upper portion of the casing 45 above the first and second idle shafts 75 and 79 between the crankshaft 33 and the motor 30.

As best shown in FIG. 11, the breather chamber 134 is defined between the left casing half 46 and the right casing half 47, and a communication hole 135 for making communication between an upper portion of the breather chamber 134 and the second storing chamber 50 is formed through the left casing half 46. since the interior of the motor 30 communicates with the second storing chamber 50 through the ball bearing 100 provided between the support wall portion 95 and the motor shaft 73, the interior of the motor 30 communicates with the upper portion of the breather chamber 134 through the second storing chamber 50. Further, a breather hole 136 for making communication between a lower portion of the breather chamber 134 and the outside air is formed through the right casing half 47. Further, the left casing half 46 is integrally formed with a wall 137 projecting close to the right casing half 47 in such a manner that a labyrinth is formed between the communication hole 135 and the breather hole 136.

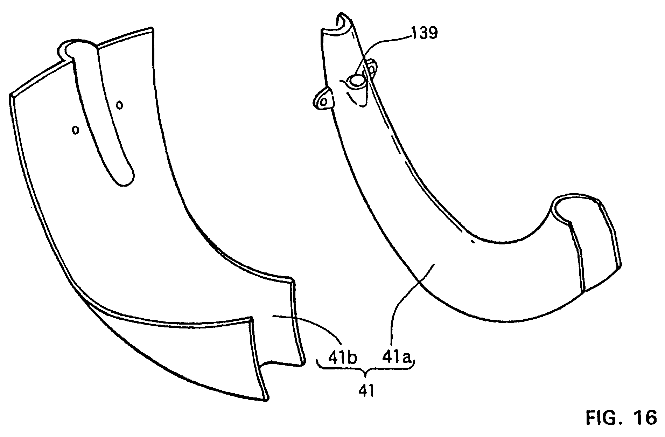

Referring to FIG. 16, the cover 41 for covering most of the body frame 21 is composed of an upper cover 41a for covering an upper portion of the body frame 21 and a lower cover 41b for covering a lower portion of the body frame 21. The upper cover 41a and the lower cover 41b are connected together. An opening 139 for exposing the main switch 42 is formed at an upper portion of the upper cover 41a.

The operation of this preferred embodiment will now be described. When an operator depresses the crank pedals 32 to run the motor-assisted bicycle, the torque of the crankshaft 33 is transmitted through the power transmitting means 56 to the drive sprocket 34 and next transmitted through the chain 36 and the driven sprocket 35 to the rear wheel W_{R}.

At this time, the input torque from the crank pedals 32 is detected by the torque detecting means S_{T}. Further, the rotating speed of the motor 30 as a rotating speed representing a bicycle speed is detected by the rotating speed detecting means S_{R}. An assisting power according to detection values output from the two detecting means S_{T} and S_{R} is exerted from the motor 30 to thereby reduce a load on the operator.

In the power unit 31 of the motor-assisted bicycle, the outer circumferential portion of the first intermediate gear 76 as one of the plural gears 74, 76, 77, 78, 81, and 82 constituting the reduction gear train 57 provided between the motor 30 and the rotating cylinder 53 is formed of a synthetic resin. Accordingly, generation of a gear noise from a meshing portion between the first intermediate gear 76 and the drive gear 74 can be suppressed. Even though the motor 30 is of a high-speed type due to the fact that the axial length of the motor 30 along the axis of the motor shaft 73 parallel to the axis of the crankshaft 33 must be made smaller than the axial length of the crankshaft 33, generation of a gear noise from the reduction gear train 57 can be minimized. Furthermore, since the first intermediate gear 76 meshes with the drive gear 74 fixed to the motor shaft 73 of the motor 30, the effect of suppressing the gear noise can be enhanced by suppressing the gear noise at the meshing portion between the highest-speed gears 74 and the first intermediate gear 76 in the reduction gear train 57.

The first intermediate gear 76 is constructed by securing the synthetic resin ring member 119 having the outer circumferential gear teeth 125 to the metal boss 118 coupled to the first idle shaft 75. Accordingly, the gear teeth 125 required to have high working accuracy can be formed by molding of a synthetic resin, thereby improving the accuracy of the gear teeth 125. Additionally, a coupling load for fixing the first intermediate gear 76 to the first idle shaft 75 is prevented from acting on the ring member 119 which is relatively weak in strength due to the synthetic resin, so that the coupling load can be increased to thereby ensure reliable fixing of the first intermediate gear 76 to the first idle shaft 75.

In fixing the first intermediate gear 76 to the first idle shaft 75, relative rotation of the first intermediate gear 76 about the axis of the first idle shaft 75 is prohibited, and the coned disk spring 131 is provided between the other end of the first intermediate gear 76 whose one end abuts against the inner ring of the ball bearing 84 and the seat member 129 stopped by the stop ring 130. Accordingly, no torque acts on the first intermediate gear 76 in fixing to the first idle shaft 75 the first intermediate gear 76 meshing with the drive gear 74. Accordingly, no torque acts on the ring member 119 formed of a synthetic resin relatively weak in strength and meshing with the drive gear 74. Thus, the first intermediate gear 76 can be securely fixed to the first idle shaft 75.

In fixing the drive gear 74 to the motor shaft 73 prior to mounting the housing 90 of the motor 30 to the casing 45, the drive gear 74 is securely mounted on the motor shaft 73 by means of the bolt 142 coaxial with the motor shaft 73 in the condition that a tool such as a wrench is engaged with the flat engagement surfaces 73a of the motor shaft 73 inserted through the support wall portion 95 with the ball bearing 100 interposed therebetween to thereby prohibit the rotation of the motor shaft 73. Accordingly, even when coupling the drive gear 74 meshing with the first intermediate gear 76 to the motor shaft 73, no torque acts on the first intermediate gear 76, so that the first intermediate gear 76 whose meshing portion with respect to the drive gear 74 is formed of a synthetic resin can be protected.

The housing 90 of the motor 30 is engaged with the cylindrical portion 88 of the left casing half 46, and is secured to the left casing half 46 by the pair of bolts 89. The annular recess 105 like a shoulder is formed on the inner circumferential surface of the cylindrical portion 88 at its outer open end, and the annular portion 106 of the right casing half 47 connected to the left casing half 46 is formed so as to surround the housing 90. The O-ring 107 is held between the annular recess 105 and the annular portion 106 joined to the outer open end of the cylindrical portion 88, so as to make close contact with the outer circumference of the housing 90. Accordingly, the housing 90 of the motor 30 is mounted to the casing 45 in such a manner that a part of the housing 90 projects from the right casing half 47. That is, the casing 45 need not be provided with a portion for fully covering the motor 30. Thus, the housing 90 of the motor 30 can be mounted to the casing 45 with the sealability therebetween being maintained, and the casing 45 can be reduced in size and weight.

The annular recess 105 is formed on the inner circumference of the cylindrical portion 88 at its outer open end. Therefore, in the case that the left casing half 46 is formed by casting, the annular recess 105 can be formed at the same time the left casing half 46 is formed. Accordingly, no cutting is required in forming the annular recess 105, thereby reducing the number of working steps.

In mounting the housing 90 of the motor 30 to the casing 45, the housing 90 may be engaged into the cylindrical portion 88 in the condition that the O-ring 107 is not mounted in the annular recess 105 prior to joining the right and left casing halves 47 and 46. In this case, after engaging the housing 90 into the cylindrical portion 88, the O-ring 107 is mounted in the annular recess 105, and the right and left casing halves 47 and 46 are next joined together. Accordingly, in comparison with the case that the housing 90 is engaged into the cylindrical portion 88 after mounting the O-ring 107, damage to the O-ring 107 can be prevented, and frictional resistance occurring in engaging the housing 90 can be reduced to thereby improve the workability.

The annular portion 106 of the right casing half 47 is integrally formed with the hanger portion 113 for supporting the casing 45 to the rear forks 25 of the body frame 21 in cooperation with the hanger portion 112 of the left casing half 46. Accordingly, any dedicated parts for supporting the casing 45 to the body frame 21 are not required, thereby reducing the number of parts.

The interior of the motor 30 communicates with the second storing chamber 50 of the casing 45 through the ball bearing 100, and the breather chamber 134 is defined at an upper portion of the casing 45 between the right and left casing halves 47 and 46. Further, the communication hole 135 for making communication between an upper portion of the breather chamber 134 and the second storing chamber 50 is formed through the left casing half 46, and the breather hole 136 for making communication between a lower portion of the breather chamber 134 and the outside air is formed through the right casing half 47. Accordingly, the air inside the housing 90 of the motor 30 is permitted to breathe through the breather chamber 134 and the breather hole 136 according to expansion and contraction of the air due to repetition of heating in use of the motor 30 and cooling in no use of the motor 30, thereby preventing an increase and decrease in pressure in the housing 90 of the motor 30. Accordingly, a sealing structure between the housing 90 and the casing 45 can be simplified by using the O-ring 107 held between the two casing halves 46 and 47 and making it into close contact with the outer circumference of the housing 90. Furthermore, the breather hole 136 communicates with the lower portion of the breather chamber 134 present at an upper portion of the casing 45, and an upper portion of the breather chamber 134 communicates with the interior of the motor 30. Accordingly, the entry of water from the breather chamber 134 into the second storing chamber 50 and the housing 90 of the motor 30 can be prevented, and the water in the breather chamber 134 can be reliably expelled from the breather hole 136.

Further, the breather chamber 134 is formed at an upper portion of the casing 45 between the crankshaft 33 and the motor 30. That is, the breather chamber 134 is present at a relatively high level from the ground surface, thereby minimizing the entry of water into the breather chamber 134. Further, the first and second idle shafts 75 and 79 as the components of the reduction gear train 57 are rotatably supported to the casing 45 at a level lower than the straight line connecting the axis of the crankshaft 33 and the axis of rotation of the motor 30. Accordingly, the reduction gear train 57 can be configured in a close positional relation between the crankshaft 33 and the motor 30, and the breather chamber 134 can be formed by effectively utilizing a dead space between the crankshaft 33 and the motor 30, thereby making the power unit 31 compact.

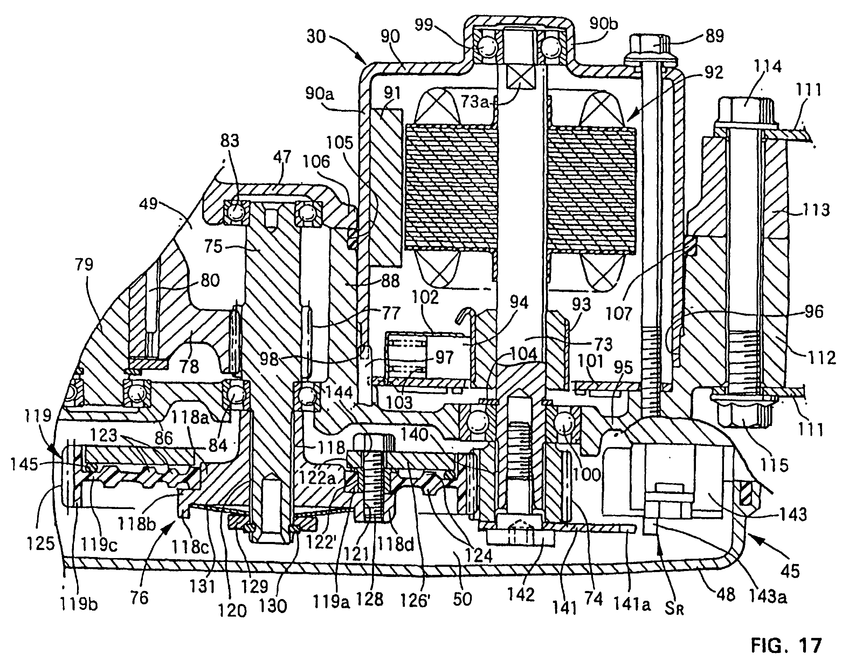

FIG. 17 shows a second preferred embodiment of the present invention, in which parts corresponding to those of the first preferred embodiment are denoted by the same reference numerals.

A plurality of metal cylindrical collars 122' respectively corresponding to the plural tapped holes 121 of the boss 118 are embedded in the synthetic resin ring member 119 constituting the first intermediate gear 76 in cooperation with the boss 118. Each collar 122' is integrally formed with a flange 122a projecting radially outward from one end opposite to the mounting plate portion 118b of the boss 118. The flange 122a of the collar 122' abuts against one surface of the ring member 119. A metal ringlike reinforcing plate 126' having a plurality of through holes 144 respectively corresponding to the collars 122' is mounted so that an inner circumferential portion of the reinforcing plate 126' abuts against the flanges 122a of the collars 122'. A bolt 128 is inserted through each through hole 144 and its corresponding collar 122', and is threadedly engaged with its corresponding tapped hole 121 of the boss 118. Thus, the ring member 119 is secured to the boss 118 so that an excess securing force is prevented from acting on the ring member 119 formed of a synthetic resin. Further, an annular elastic member 145 such as an O-ring is interposed between an outer circumferential portion of the reinforcing plate 126' and an outer circumferential portion of the connecting plate portion 119c of the ring member 119.

By the use of the reinforcing plate 126' and the annular elastic member 145, lateral rigidity of the ring member 119 can be increased to thereby prevent inclination of the gear teeth 125 and increase the degree of freedom of shaping of the ring member 119. Accordingly, the dynamic meshing accuracy of the gear teeth 125 can be improved.

For example, while the outer circumferential portion of only the first intermediate gear 76 of the plural gears 74, 76, 77, 78, 81, and 82 constituting the reduction gear train 57 is formed of a synthetic resin in the above preferred embodiment, the outer circumferential portions of two or more of the plural gears 74, 76, 77, 78, 81, and 82 may be formed of a synthetic resin. Further, the whole of the specific gear may be formed of a synthetic resin. Further, while the ball bearing 84 is used as a stopper for receiving one end of the first intermediate gear 76 as the specific gear in the above preferred embodiment, such a stopper may be formed like a shoulder directly on the first idle shaft 75.

To minimize the generation of a gear noise from a reduction gear train in a power unit for a motor-assisted bicycle, the reduction gear train being provided between a power transmitting member and an electric assisting motor, the power transmitting member being rotatably supported to a casing and operatively connected to a rear wheel, for transmitting torque from a crankshaft, the electric assisting motor being mounted to the casing and having a motor shaft whose axis is parallel to the axis of the crankshaft, the axial length of the motor along the axis of the motor shaft being smaller than the axial length of the crankshaft.

At least an outer circumferential portion of at least one specific gear 76 of plural gears 74, 76, 77, 78, 81, and 82 constituting a reduction gear train 57 is formed of a synthetic resin.

## Claims

1. Power unit for a motor-assisted bicycle including a casing (45) supported to a body frame (21) and rotatably supporting a crankshaft (33) having crank pedals (32) at its opposite ends, a power transmitting member (53) rotatably supported to said casing (45) and operatively connected to a rear wheel (W_{R}), for transmitting torque from said crankshaft (33), an electric assisting motor (30) mounted to said casing (45) and having a motor shaft (73) whose axis is parallel to the axis of said crankshaft (33), the axial length of said motor (30) along the axis of said motor shaft (73) being smaller than the axial length of said crankshaft (33), and a reduction gear train (57) provided between said motor (30) and said power transmitting member (53);
**characterized in that** at least an outer circumferential portion of at least one specific gear (76) of plural gears (74, 76, 77, 78, 81, 82) is formed of a synthetic resin,
wherein said specific gear (76) comprises a metal boss (118), wherein said boss (118) has a flange portion (118a) projecting radially outwardly, and mounting plate portion (118b) projecting radially outwardly from the flange portion ( 118a) in such a manner that a shoulder is formed in cooperation with the outer circumference of the flange portion (118a), and a synthetic resin ring member (119) fitted to the outer circumference of the flange portion ( 118a) is mounted on the mounting plate portion (118b).

2. Power unit for a motor-assisted bicycle including a casing (45) supported to a body frame (21 ) and rotatably supporting a crankshaft (33) having crank pedals (32) at its opposite ends, a power transmitting member (53) rotatably supported to said casing (45) and operatively connected to a rear wheel (W_{R}), for transmitting torque from said crankshaft (33), an electric assisting motor (30) mounted to said casing (45) and having a motor shaft (73) whose axis is parallel to the axis of said crankshaft (33), the axial length of said motor (30) along the axis of said motor shaft (73) being smaller than the axial length of said crankshaft (33), and a reduction gear train (57) provided between said motor (30) and said power transmitting member (53);
**characterized in that** at least an outer circumferential portion of at least one specific gear (76) of plural gears (74, 76, 77, 78, 81, 82) is formed of a synthetic resin,
wherein said specific gear (76) comprises a metal boss (118) and a synthetic resin ring member (119), wherein said ring member (119) includes a supporting member (119a) like a ring plate having inner diameter allowing engagement of the boss (118), a cylindrical portion (119b) surrounding supporting portion (119a) in coaxial relationship therewith and having a plurality of gear teeth (125), and connecting plate portion (119c) connecting the supporting portion (119a) to cylindrical portion (119b), ribs (123, 124) projecting from supporting portion (119a) and connecting plate portion (119c).

3. Power unit for a motor-assisted bicycle including a casing (45) supported to a body frame (21) and rotatably supporting a crankshaft (33) having crank pedals (32) at its opposite ends, a power transmitting member (53) rotatably supported to said casing (45) and operatively connected to a rear wheel (W_{R}), for transmitting torque from said crankshaft (33), an electric assisting motor (30) mounted to said casing (45) and having a motor shaft (73) whose axis is parallel to the axis of said crankshaft (33), the axial length of said motor (30) along the axis of said motor shaft (73) being smaller than the axial length of said crankshaft (33), and a reduction gear train (57) provided between said motor (30) and said power transmitting member (53);
**characterized in that** at least an outer circumferential portion of at least one specific gear (76) of plural gears (74, 76, 77, 78, 81, 82) is formed of a synthetic resin,
wherein said specific gear (76) comprises a metal boss (118), which has a mounting plate portion (118b), and a synthetic resin ring member ( 119), wherein said ring member ( 119) is mounted on the mounting plate portion (118b) from the side corresponding to one axial end of the boss (118) and a metal reinforcing plate (126, 126') mounted on the ring member (119) on the side opposite to the mounting plate portion (118b).

4. Power unit for a motor-assisted bicycle including a casing (45) supported to a body frame (21) and rotatably supporting a crankshaft (33) having crank pedals (32) at its opposite ends, a power transmitting member (53) rotatably supported to said casing (45) and operatively connected to a rear wheel (W_{R}), for transmitting torque from said crankshaft (33), an electric assisting motor (30) mounted to said casing (45) and having a motor shaft (73) whose axis is parallel to the axis of said crankshaft (33), the axial length of said motor (30) along the axis of said motor shaft (73) being smaller than the axial length of said crankshaft (33), and a reduction gear train (57) provided between said motor (30) and said power transmitting member (53);
**characterized in that** at least an outer circumferential portion of at least one specific gear (76) of plural gears (74, 76, 77, 78, 81, 82) is formed of a synthetic resin,
wherein the power unit comprises a shaft (75) rotatably supported to said casing (45), a stopper (84) provided on said shaft (75) for receiving one axial end of said specific gear (76) in an axial direction of said shaft (75), a seat member (129) detachably mounted on said shaft (75) so as to be opposed to the other axial end of said specific gear (76) in said axial direction of said shaft (75), and a spring member (131) provided between said seat member (129) and the other axial end of said specific gear (76) for exerting a biasing force for pressing the one axial end of said specific gear (76) against said stopper (84), said specific gear (76) being mounted on said shaft (75) so that rotation of said specific gear (76) relative to said shaft (75) is prohibited.

5. Power unit according to one of claims 1 to 4, wherein reduction gear train (57) consists of plural gears (74, 76, 77, 78, 81, 82), said specific gear (76) is meshing with a drive gear (74) fixed to said motor shaft (73).

6. Power unit according to one of claims 1 to 4, wherein a teeth portion (125) of the one specific gear (76) is helical teeth.

7. Power unit according to one of claims 1 to 4, wherein a rotation speed detecting means (Sr) detecting rotation speed of motor shaft (73) is included in electric assisting motor (30).

8. Power unit according to one of claims 1 to 4, wherein said specific gear (76) comprises a metal boss (118) coupled to a shaft (75) rotatably supported to said casing (45) and a synthetic resin ring member (119) secured to said metal boss (118), said synthetic resin ring member (119) having a plurality of outer circumferential gear teeth (125).

9. Power unit for a motor-assisted bicycle according to one of claims 1 to 4, wherein said motor (30) comprises a cylindrical housing (90) having an open end and a closed end, said housing (90) being detachably mounted to said casing (45), a first bearing (99) provided at said closed end of said housing (90) for rotatably supporting one end of said motor shaft (73), a second bearing (100) provided at a support wall portion (95) of said casing (45) opposed to said open end of said housing (90) for rotatably supporting an axially intermediate portion of said motor shaft (73), a drive gear (74) mounted on the other end of said motor shaft (73) projecting from said support wall portion (95), a pair of parallel flat engagement surfaces (73a) formed on the outer circumference of said motor shaft (73).

## Patentansprüche

1. Antriebseinheit für ein motorunterstütztes Fahrrad, enthaltend ein Gehäuse (45), das an einem Hauptrahmen (21 ) getragen ist und eine Kurbelwelle (33), die an ihren entgegengesetzten Enden Kurbelpedale (32) aufweist, drehbar trägt, ein Kraftübertragungselement (53), das an dem Gehäuse (45) drehbar gelagert ist und mit einem Hinterrad (W_{R}) betriebsmäßig verbunden ist, um ein Drehmoment von der Kurbelwelle (33) zu übertragen, einen elektrischen Hilfsmotor (30), der an dem Gehäuse (45) angebracht ist und eine Motorwelle (73) aufweist, deren Achse parallel zur Achse der Kurbelwelle (33) ist, wobei die axiale Länge des Motors (30) entlang der Achse der Motorwelle (73) kleiner ist als die axiale Länge der Kurbelwelle (33), sowie einen Untersetzungsgetriebezug (57), der zwischen dem Motor (30) und dem Kraftübertragungselement (53) vorgesehen ist; **dadurch gekennzeichnet, dass** zumindest ein Außenumfangsabschnitt zumindest eines bestimmten Zahnrads (76) mehrerer Zahnräder (74, 76, 77, 78, 81, 82) aus Kunstharz gebildet ist,
worin das bestimmte Zahnrad (76) eine Metallnabe (118) aufweist, worin die Nabe (118) einen radial nach außen vorstehenden Flanschabschnitt (118a) und einen von dem Flanschabschnitt (118a) radial nach außen vorstehenden Montageplattenabschnitt ( 118b) aufweist, derart, dass im Zusammenwirken mit dem Außenumfang des Flanschabschnitts (118a) eine Schulter gebildet wird, und ein auf den Außenumfang des Flanschabschnitts (118a) aufgesetztes Kunstharzringelement (119) an dem Montageplattenabschnitt (118b) angebracht ist.

2. Antriebseinheit für ein motorunterstütztes Fahrrad, enthaltend ein Gehäuse (45), das an einem Hauptrahmen (21) getragen ist und eine Kurbelwelle (33), die an ihren entgegengesetzten Enden Kurbelpedale (32) aufweist, drehbar trägt, ein Kraftübertragungselement (53), das an dem Gehäuse (45) drehbar gelagert ist und mit einem Hinterrad (W_{R}) betriebsmäßig verbunden ist, um ein Drehmoment von der Kurbelwelle (33) zu übertragen, einen elektrischen Hilfsmotor (30), der an dem Gehäuse (45) angebracht ist und eine Motorwelle (73) aufweist, deren Achse parallel zur Achse der Kurbelwelle (33) ist, wobei die axiale Länge des Motors (30) entlang der Achse der Motorwelle (73) kleiner ist als die axiale Länge der Kurbelwelle (33), sowie einen Untersetzungsgetriebezug (57), der zwischen dem Motor (30) und dem Kraftübertragungselement (53) vorgesehen ist; **dadurch gekennzeichnet, dass** zumindest ein Außenumfangsabschnitt zumindest eines bestimmten Zahnrads (76) mehrerer Zahnräder (74, 76, 77, 78, 81, 82) aus Kunstharz gebildet ist,
worin das bestimmte Zahnrad (76) eine Metallnabe (118) und ein Kunstharzringelement ( 119) aufweist, worin das Ringelement (119) ein ringplattenartiges Tragelement ( 119a), dessen Innendurchmesser den Eingriff der Nabe (118) gestattet, einen zylindrischen Abschnitt (119b), der den Tragabschnitt (119a) in koaxialer Beziehung damit umgibt und eine Mehrzahl von Zähnen (125) aufweist, sowie einen Verbindungsplattenabschnitt (119c), der den Tragabschnitt (119a) mit dem zylindrischen Abschnitt (119b) verbindet, enthält, wobei von dem Tragabschnitt (119a) und dem Verbindungsplattenabschnitt (119c) Rippen (123, 124) vorstehen.

3. Antriebseinheit für ein motorunterstütztes Fahrrad, enthaltend ein Gehäuse (45), das an einem Hauptrahmen (21 ) getragen ist und eine Kurbelwelle (33), die an ihren entgegengesetzten Enden Kurbelpedale (32) aufweist, drehbar trägt, ein Kraftübertragungselement (53), das an dem Gehäuse (45) drehbar gelagert ist und mit einem Hinterrad (W_{R}) betriebsmäßig verbunden ist, um ein Drehmoment von der Kurbelwelle (33) zu übertragen, einen elektrischen Hilfsmotor (30), der an dem Gehäuse (45) angebracht ist und eine Motorwelle (73) aufweist, deren Achse parallel zur Achse der Kurbelwelle (33) ist, wobei die axiale Länge des Motors (30) entlang der Achse der Motorwelle (73) kleiner ist als die axiale Länge der Kurbelwelle (33), sowie einen Untersetzungsgetriebezug (57), der zwischen dem Motor (30) und dem Kraftübertragungselement (53) vorgesehen ist; **dadurch gekennzeichnet, dass** zumindest ein Außenumfangsabschnitt zumindest eines bestimmten Zahnrads (76) mehrerer Zahnräder (74, 76, 77, 78, 81, 82) aus Kunstharz gebildet ist,
worin das bestimmte Zahnrad (76) eine Metallnabe ( 118), die einen Montageplattenabschnitt(118b)aufweist, und ein Kunstharzringelement (119) aufweist, wobei das Ringelement (119) an dem Montageplattenabschnitt (1 18b) von der dem einen axialen Ende der Nabe (118) entsprechenden Seite her angebracht ist und eine Metallverstärkungsplatte (126, 126') an dem Ringelement (119) an der dem Montagepfattenabschnitt (118b) entgegengesetzten Seite angebracht ist.

4. Antriebseinheit für ein motorunterstütztes Fahrrad, enthaltend ein Gehäuse (45), das an einem Hauptrahmen (21) getragen ist und eine Kurbelwelle (33), die an ihren entgegengesetzten Enden Kurbelpedale (32) aufweist, drehbar trägt, ein Kraftübertragungselement (53), das an dem Gehäuse (45) drehbar gelagert ist und mit einem Hinterrad (W_{R}) betriebsmäßig verbunden ist, um ein Drehmoment von der Kurbelwelle (33) zu übertragen, einen elektrischen Hilfsmotor (30), der an dem Gehäuse (45) angebracht ist und eine Motorwelle (73) aufweist, deren Achse parallel zur Achse der Kurbelwelle (33) ist, wobei die axiale Länge des Motors (30) entlang der Achse der Motorwelle (73) kleiner ist als die axiale Länge der Kurbelwelle (33), sowie einen Untersetzungsgetriebezug (57), der zwischen dem Motor (30) und dem Kraftübertragungselement (53) vorgesehen ist;
**dadurch gekennzeichnet, dass** zumindest ein Außenumfangsabschnitt zumindest eines bestimmten Zahnrads (76) mehrerer Zahnräder (74, 76, 77, 78, 81, 82) aus Kunstharz gebildet ist,
worin die Antriebseinheit ferner umfasst: eine Welle (75), die an dem Gehäuse (45) drehbar gelagert ist, einen Anschlag (84), der an der Welle (75) vorgesehen ist, um ein axiales Ende des bestimmten Zahnrads (76) in einer Achsrichtung der Welle (75) aufzunehmen, ein Sitzelement (129), das an der Welle (75) entfernbar angebracht ist, so dass es dem anderen axialen Ende des bestimmten Zahnrads (76) in der axialen Richtung der Welle (75) gegenüberliegt, sowie ein Federelement (131), das zwischen dem Sitzelement (129) und dem anderen axialen Ende des bestimmten Zahnrads (76) vorgesehen ist, um eine Spannkraft zum Drücken des einen axialen Endes des bestimmten Zahnrads (76) gegen den Anschlag (84) auszuüben, wobei das bestimmte Zahnrad (76) an der Welle (75) derart angebracht ist, dass eine Drehung des bestimmten Zahnrads (76) relativ zu der Welle (75) unterbunden wird.

5. Antriebseinheit nach einem der Ansprüche 1 bis 4, worin der Untersetzungsgetriebezug (57) aus mehreren Zahnrädern (74, 76, 77, 78, 81, 82) besteht, wobei das bestimmte Zahnrad (76) mit einem an der Motorwelle (73) befestigten Antriebszahnrad (74) in Eingriff steht.

6. Antriebseinheit nach einem der Ansprüche 1 bis 4, worin ein Verzahnungsabschnitt (125) des einen bestimmten Zahnrads (76) eine Schraubverzahnung ist.

7. Antriebseinheit nach einem der Ansprüche 1 bis 4, worin ein Drehzahlerfassungsmittel (Sr), das eine Drehzahl der Motorwelle (73) erfasst, in dem elektrischen Hilfsmotor (30) enthalten ist.

8. Antriebseinheit nach einem der Ansprüche 1 bis 4, worin das bestimmte Zahnrad (76) eine Metallnabe (118), die mit einer an dem Gehäuse (45) drehbar gelagerten Welle (75) gekoppelt ist, und ein Kunstharzringelement (119), das an der Metallnabe (1 18) gesichert ist, aufweist, wobei das Kunstharzringelement (119) eine Mehrzahl von Außenumfangszähnen (125) aufweist.

9. Antriebseinheit für ein motorunterstütztes Fahrrad nach einem der Ansprüche 1 bis 4, worin der Motor (30) umfasst: einen zylindrischen Mantel (90), der ein offenes Ende und ein geschlossenes Ende aufweist, wobei der Mantel (90) an dem Gehäuse (45) abnehmbar angebracht ist, ein erstes Lager (99), das am geschlossenen Ende des Mantels (90) vorgesehen ist, um ein Ende der Motorwelle (73) drehbar zu lagern, ein zweites Lager (100), das an einem Tragwandabschnitt (95) des Gehäuses (45) gegenüber dem offenen Ende des Mantels (90) vorgesehen ist, um einen axialen Mittelabschnitt der Motorwelle (73) drehbar zu lagern, ein Antriebszahnrad (74), das an dem von dem Tragwandabschnitt (95) vorstehenden anderen Ende der Motorwelle (73) angebracht ist, sowie ein Paar paralleler flacher Eingriffsflächen (73a), die am Außenumfang der Motorwelle (73) ausgebildet sind.

## Revendications

1. Groupe moteur pour bicyclette à assistance motorisée comprenant un carter (45) prenant appui sur un cadre (21) et supportant de façon rotative un arbre coudé (33) ayant des pédales (32) au niveau de ses extrémités opposées, un élément de transmission de puissance (53) prenant appui de façon rotative sur ledit carter (45) et relié de manière opérationnelle à une roue arrière (W_{R}), pour transmettre un couple à partir dudit arbre coudé (33), un moteur d'assistance électrique (30) monté sur ledit carter (45) et ayant un arbre de moteur (73) dont l'axe est parallèle à l'axe dudit arbre coudé (33), la longueur axiale dudit moteur (30) le long de l'axe dudit arbre de moteur (73) étant plus courte que la longueur axiale dudit arbre coudé (33), et un train d'engrenages réducteur (57) prévu entre ledit moteur (30) et ledit élément de transmission de puissance (53) ;
**caractérisé en ce qu'**au moins une partie de la circonférence extérieure d'au moins une roue d'engrenage spécifique (76) parmi plusieurs roues d'engrenage (74, 76, 77, 78, 81, 82) est formée d'une résine synthétique,
dans lequel ladite roue d'engrenage spécifique (76) comprend un bossage métallique (118), dans laquelle ledit bossage (118) a une partie de bride (118a) faisant saillie de façon radiale vers l'extérieur, et une partie de plaque de montage (118b) faisant saillie de façon radiale vers l'extérieur à partir de la partie de bride (118a) d'une manière telle qu'un épaulement est formé en coopération avec la circonférence extérieure de la partie de bride (118a), et un élément de bague en résine synthétique (119) installé sur la circonférence extérieure de la partie de bride (118a) est monté sur la partie de plaque de montage (118b).

2. Groupe moteur pour bicyclette à assistance motorisée comprenant un carter (45) prenant appui sur un cadre (21) et supportant de façon rotative un arbre coudé (33) ayant des pédales (32) au niveau de ses extrémités opposées, un élément de transmission de puissance (53) prenant appui de façon rotative sur ledit carter (45) et relié de manière opérationnelle à une roue arrière (W_{R}), pour transmettre un couple à partir dudit arbre coudé (33), un moteur d'assistance électrique (30) monté sur ledit carter (45) et ayant un arbre de moteur (73) dont l'axe est parallèle à l'axe dudit arbre coudé (33), la longueur axiale dudit moteur (30) le long de l'axe dudit arbre de moteur (73) étant plus courte que la longueur axiale dudit arbre coudé (33), et un train d'engrenages réducteur (57) prévu entre ledit moteur (30) et ledit élément de transmission de puissance (53) ;
**caractérisé en ce qu'**au moins une partie de la circonférence extérieure d'au moins une roue d'engrenage spécifique (76) parmi plusieurs roues d'engrenage (74, 76, 77, 78, 81, 82) est formée d'une résine synthétique,
dans lequel ladite roue d'engrenage spécifique (76) comprend un bossage métallique (118) et un élément de bague en résine synthétique (119), dans laquelle ledit élément de bague (119) comprend un élément de support (119a) comme une plaque annulaire ayant un diamètre intérieur permettant l'engagement du bossage (118), une partie cylindrique (119b) entourant la partie de support (119a) en relation coaxiale avec celle-ci et ayant une pluralité de dents de roue d'engrenage (125), et une partie de plaque connective (119c) reliant la partie de support (119a) à la partie cylindrique (119b) et aux nervures (123, 124) faisant saillie à partir de la partie de support (119a) et la partie de plaque connective (119c).

3. Groupe moteur pour bicyclette à assistance motorisée comprenant un carter (45) prenant appui sur un cadre (21) et supportant de façon rotative un arbre coudé (33) ayant des pédales (32) au niveau de ses extrémités opposées, un élément de transmission de puissance (53) prenant appui de façon rotative sur ledit carter (45) et relié de manière opérationnelle à une roue arrière (W_{R}), pour transmettre un couple à partir dudit arbre coudé (33), un moteur d'assistance électrique (30) monté sur ledit carter (45) et ayant un arbre de moteur (73) dont l'axe est parallèle à l'axe dudit arbre coudé (33), la longueur axiale dudit moteur (30) le long de l'axe dudit arbre de moteur (73) étant plus courte que la longueur axiale dudit arbre coudé (33), et un train d'engrenages réducteur (57) prévu entre ledit moteur (30) et ledit élément de transmission de puissance (53) ;
**caractérisé en ce qu'**au moins une partie de la circonférence extérieure d'au moins une roue d'engrenage spécifique (76) parmi plusieurs roues d'engrenage (74, 76, 77, 78, 81, 82) est formée d'une résine synthétique,
dans lequel ladite roue d'engrenage spécifique (76) comprend un bossage métallique (118), qui a une partie de plaque de montage (118b) et un élément de bague en résine synthétique (119), dans laquelle ledit élément de bague (119) est monté sur la partie de plaque de montage (118b) à partir du côté correspondant à une extrémité axiale du bossage (118) et une plaque de renforcement en métal (126, 126') montée sur l'élément de bague (119) sur le côté opposé à la partie de plaque de montage (118b).

4. Groupe moteur pour bicyclette à assistance motorisée comprenant un carter (45) prenant appui sur un cadre (21) et supportant de façon rotative un arbre coudé (33) ayant des pédales (32) au niveau de ses extrémités opposées, un élément de transmission de puissance (53) prenant appui de façon rotative sur ledit carter (45) et relié de manière opérationnelle à une roue arrière (W_{R}), pour transmettre un couple à partir dudit arbre coudé (33), un moteur d'assistance électrique (30) monté sur ledit carter (45) et ayant un arbre de moteur (73) dont l'axe est parallèle à l'axe dudit arbre coudé (33), la longueur axiale dudit moteur (30) le long de l'axe dudit arbre de moteur (73) étant plus courte que la longueur axiale dudit arbre coudé (33), et un train d'engrenages réducteur (57) prévu entre ledit moteur (30) et ledit élément de transmission de puissance (53) ;
**caractérisé en ce qu'**au moins une partie de la circonférence extérieure d'au moins une roue d'engrenage spécifique (76) parmi plusieurs roues d'engrenage (74, 76, 77, 78, 81, 82) est formée d'une résine synthétique,
dans lequel le groupe moteur comprend un arbre (75) prenant appui de façon rotative sur ledit carter (45), une butée (84) prévue sur ledit arbre (75) pour recevoir une première extrémité axiale de ladite roue d'engrenage spécifique (76) dans une direction axiale dudit arbre (75), un élément de siège (129) monté de façon détachable sur ledit arbre (75) afin d'être opposé à l'autre extrémité axiale de ladite roue d'engrenage spécifique (76) dans ladite direction axiale dudit arbre (75), et un élément de ressort (131) prévu entre ledit élément de siège (129) et l'autre extrémité axiale de ladite roue d'engrenage spécifique (76) pour exercer une force de recul pour pousser la première extrémité axiale de ladite roue d'engrenage spécifique (76) contre ladite butée (84), ladite roue d'engrenage spécifique (76) étant montée sur ledit arbre (75) de telle sorte que la rotation de ladite roue d'engrenage spécifique (76) par rapport audit arbre (75) est empêchée.

5. Groupe moteur selon l'une des revendications 1 à 4, dans lequel le train d'engrenages réducteur (57) est constitué de plusieurs roues d'engrenage (74, 76, 77, 78, 81, 82), et ladite roue d'engrenage spécifique (76) vient en prise avec une roue d'entraînement (74) fixée audit arbre de moteur (73).

6. Groupe moteur selon l'une des revendications 1 à 4, dans lequel une partie des dents (125) de la première roue d'engrenage spécifique (76) se compose de dents hélicoïdales.

7. Groupe moteur selon l'une des revendications 1 à 4, dans lequel un moyen de détection de vitesse de rotation (Sr) détectant une vitesse de rotation de l'arbre de moteur (73) est compris dans le moteur d'assistance électrique (30).

8. Groupe moteur selon l'une des revendications 1 à 4, dans lequel ladite roue d'engrenage spécifique (76) comprend un bossage métallique (118) couplé à un arbre (75) prenant appui de façon rotative sur ledit carter (45) et un élément de bague en résine synthétique (119) fixé audit bossage métallique (118), ledit élément annulaire en résine synthétique (119) ayant une pluralité de dents d'engrenage sur la circonférence extérieure (125).

9. Groupe moteur pour bicyclette à assistance motorisée selon l'une des revendications 1 à 4, dans lequel ledit moteur (30) comprend un logement cylindrique (90) ayant une extrémité ouverte et une extrémité fermée, ledit logement (90) étant monté de façon détachable sur ledit carter (45), un premier palier (99) étant prévu au niveau de ladite extrémité fermée dudit logement (90) pour supporter de façon rotative une extrémité dudit arbre de moteur (73), un second palier (100) étant prévu au niveau d'une partie de paroi de support (95) dudit carter (45) opposée à ladite extrémité ouverte dudit logement (90) pour supporter de façon rotative une partie intermédiaire le long de l'axe dudit arbre de moteur (73), une roue d'entraînement (74) montée sur l'autre extrémité dudit arbre de moteur (73) faisant saillie à partir de ladite partie de paroi de support (95), une paire de surfaces de prise plates parallèles (73a) formée sur la circonférence extérieure dudit arbre de moteur (73).
